Europäisches Patentamt

European Patent Office

Office européen des brevets

(11) Veröffentlichungsnummer: **0 166 187**
**B1**

(12) **EUROPÄISCHE PATENTSCHRIFT**

(45) Veröffentlichungstag der Patentschrift: 08.08.90

(21) Anmeldenummer: 85106147.3

(22) Anmeldetag: 20.05.85

(51) Int. Cl.⁵: **C 08 J 3/00, C 08 L 57/00**

(54) Tetrafluorethylenpolymerisat enthaltende Polymerisatpulverkompositionen.

(30) Priorität: 29.05.84 DE 3420002

(43) Veröffentlichungstag der Anmeldung:
02.01.86 Patentblatt 86/01

(45) Bekanntmachung des Hinweises auf die
Patenterteilung:
08.08.90 Patentblatt 90/32

(84) Benannte Vertragsstaaten:
DE FR GB IT NL

(56) Entgegenhaltungen:
EP-A-0 131 751
EP-A-0 160 914
DE-A-2 702 709
US-A-3 853 809
US-A-3 940 455
US-A-3 993 621

PATENT ABSTRACTS OF JAPAN, Band 8, Nr.
193 (C-241) 1630r, 5. September 1984; & JP-A-59
84 923

PATENT ABSTRACTS OF JAPAN, Band 5, Nr. 67
(C-53) 739r, 7. Mai 1981; & JP-A-56 18 624

(73) Patentinhaber: BAYER AG
D-5090 Leverkusen 1 Bayerwerk (DE)

(72) Erfinder: Lindner, Christian, Dr.
Rielerstrasse 200
D-5000 Köln 60 (DE)
Erfinder: Peters, Horst, Dr.
Winterberg 25
D-5090 Leverkusen 3 (DE)
Erfinder: Urbanneck, Bernd
Högden 15
D-4050 Mönchengladbach 2 (DE)

Courier Press, Leamington Spa, England.

## Beschreibung

Gegenstand der Erfindung ist ein Verfahren zur Herstellung von hochdisperses, teilchenförmiges Tetrafluorethylenpolymerisat mit Fluorgehalten von 65—76 Gew.% enthaltenden pulverförmigen Polymermischungen auf der Basis, von organischen thermoplastichen Polymerisat als Substrat, dadurch gekennzeichnet, daß

I: eine wäßrige Dispersion A eines organischen thermoplastischen Polymerisats auf der Basis von Styrol, α-Methylstyrol, p-Methylstyrol, Halogenstyrol, Acrylnitril, Methacrylnitril, Alkylacrylat, Alkylmethacrylat, Maleinsäureanhydrid, N-substituiertes Maleinimid, Vinylacetat, Vinylchlorid, Vinylidenchlorid, Vinylidenfluorid und/oder eines thermoplastischen Pfropfpolymerisates dieser Monomeren auf einen Kautschuk mit einer Glasübergangstemperatur <0°C, mit einem Kautschukgehalt von 8—80 Gew.%, wobei die Dispersion einen mittleren Teilchendurchmesser ($d_{50}$) von 0,05—30 µm und einen Feststoffgehalt von 20—60 Gew.% aufweist mit einer Dispersion (B) eines Tetrafluorethylenpolymerisats mit einem mittleren Teilchendurchmesser ($d_{50}$) von 0,05—30 µm und einem Feststoffgehalt von 30—70 Gew.-% so vermischt wird, daß praktisch keine Agglomerisation der Teilchen stattfindet und daß Mischungen mit 0,01—40 Gew.-% Tetrafluorethylenpolymerisat und 99,99—60 Gew.% organischen thermoplastischem Polymerisat gebildet werden,

II: die in I gebildete Mischung bei 20—120°C und pH-Werten von 7—2 unter Bildung einer pulverförmigen Polymerenmischung koaguliert wird, so daß während der Koagulation keine nennenswerten Mengen von Tetrafluorethylenpolymerisatteilchen eines Durchmessers >30 µm gebildet werden,

III: das in II gebildete Koagulat bei Temperaturen von 50—150°C getrocknet wird.

Eine bevorzugte Ausführungsform arbeitet mit wässrigen Dispersionen (A) von organischen thermoplastischen Polymerisaten mit einem Teilchendurchmesser ($d_{50}$-Wert) von 0,05—5 µm. Besonders bevorzugt verwendet man ein Gemisch von Dispersionen organischer thermoplastischer Polymerisate worin 20—80 Gew.-% feinteiliges Polymerisat (mittlerer Teilchendruchmesser $d_{50}$=0,05 bei 0,15 µm) und 80—20 Gew.-% grobteiliges Polymerisat (mittlerer Teilchendurchmesser $d_{50}$=0,20—0,8 µm, insbesondere 0,25 bei 0,5 µm) enthalten sind.

Die erfindungsgemäß geeigneten Tetrafluorethylenpolymerisatdispersionen (B) enthalten bevorzugt Wasser als Dispergiermedium. Sie enthalten in dispergierter Form teilchenförmiges Tetrafluorethylenpolymerisat, das ganz oder überwiegend aus Tetrafluorethyleneinheiten besteht, mit einem Fluorgehalt von 65—67 Gew.-%, vorzugsweise 70—76%.

Als Tetrafluorethylenpolymerisat kommen in Frage z.B. Polytetrafluorethylensubstrat, Tetrafluorethylen-Hexafluorethylen-Copolymere oder Tetrafluorethylen-Copolymere mit geringen Mengen fluorfreier, copolymerisierbarer ethylenisch ungesättigten Monomerer. Diese Polymerisate sind bekannt, (Vgl. "Vinyl and Relates Polymers" von Schildknecht, Verlag John Wiley & Sons, Inc., New York, 1952, Seite 484—494; "Fluorpolymers" von Wall, Verlag Wiley-Interscience, Abteilung von John Wiley & Sons, Inc. New York, 1972.

Ebenfalls ist bekannt—aus US—PS 3 993 621—, Polytetrafluorethylen als Antiabtropfmittel in glasfaserverstärkten flammgeschützten Styrol-Acrylnitril-Copolymerisaten einzusetzen.

Die erfindungsgemäß geeigneten Dispersionen A sind ebenfalls bekannt.

In ihnen liegen teilchenförmige Polymerisate in unvernetzter, teilvernetzter oder hochvernetzter Form vor. Als Dispergiermedium können Wasser oder organische Lösungsmittel wie Ester, Kohlenwasserstoffe, Halogenkohlenwasserstoffe, Alkohole o.ä. fungieren, bzw. Gemische aus diesen Medien; bevorzugtes Medium ist Wasser. Solche Dispersionen sind bekannt, z.B. aus EP—A—28 344 und DE—AS—20 47 427. Es handelt sich um übliche durch Emulsions- bzw. Dispersionspolymerisation erhältliche Polymerisatdispersionen bzw. um solche, die durch Dispergierung eines fertigen Polymeren enthalten werden können.

Die erfindungsgemäß geeigneten Dispersionen A enthalten folgende Polymerisate:

—thermoplastische Polymerisate auf der Basis von olefinisch ungesättigten Monomeren wie Styrol, α-Methylstyrol, p-Methylstyrol, Halogenstyrol, Acrylnitril, Methacrylnitril, Alkylacrylat, Alkylmethacrylat, Maleinsäureanhydrid, N-subst. Maleinimid, Vinylacetat, Vinylchlorid, Vinylidenchlorid, Vinylidenfluorid und/oder

—thermoplastische Pfropfpolymerisate der oben genannten Monomeren auf Kautschukgrundlagen mit Kautschukglasübergangstemperaturen kleiner als 0°C, wobei die Pfropfpolymerisate Kautschukgehalte von 8—80 Gew.-% aufweisen.

Als Polymerisate für Dispersionen A sind besonders geeignet: Homopolymere des Styrols, Methylmethacrylate, Vinylchloride sowie deren Copolymerisate mit wenigstens einem Monomeren aus der Reihe Acrylnitril, Methacrylnitril, N-substituiertes Maleinimid (insbesondere N-Phenylmaleinimid oder N-Cyclohexylmaleinimid), Alkylmethacrylat oder Alkylacrylat sowie Pfropfpolymerisate aus z.B. Polybutadien, Polychloropren oder Styrol-Butadien- bzw. Acrylnitril-Butadien-Copolymerkautschuk mit Gelgehalten (gemessen bei 20°C) größer als 30 Gew.-%, Alkylacrylatkautschuk, EPDM-Kautschuken (Ethylen-Propylen-Dien-Monomer-Kautschuke) oder Silikonkautschuke, die mit Styrol, α-Methylstyrol, Acrylnitril, Methylmethacrylat, Vinylchlorid, Vinylacetat oder Mischungen daraus bepfropft sind. Diese

2

Pfropfpolymerisate können durch radikalische Emulsionspolymerisation hergestellt werden und sind durchweg bekannt.

Ein weiterer Gegenstand der Erfindung ist die Verwendung der erfindungsgemäßen pulverförmigen Polymermischungen als Zusatz zu thermoplastischen Formmassen zur Verbesserung von deren Gebrauchseigenschaften. Hierbei werden vorzugsweise die pulverförmigen Polymermischungen in solcher Menge eingesetzt, daß in der Gesamtformmasse weniger als 1 Gew.-% Tetrafluorethylenpolymerisat (insbesondere weniger als 0,8 Gew.-%) vorliegt.

Durch den Zusatz der erfindungsgemäßen Polymermischungen, die Tetrafluorethylenpolymerisat in teilchenförmiger, hochdisperser Form enthalten, werden verschiedene Eigenschaften der Formmassen wesentlich verbessert; so wirken die Zusätzte als Antitropfmittel bei Brand der Formkörper. Trotz der Gegenwart der Tetrafluorethylenpolymerisate werden aber die Oberflächeneigenschaften nicht gestört. Weiterhin wird das Entformungsverhalten, die Schlagzähigkeit und die Wärmeformbeständigkeit deutlich verbessert. Die Polymermischungen eignen sich hervorragend als Additiv zu Thermoplasten aus der Reihe ABS, PVC, Polycarbonate, Polyamide, Polyalkylencarbonsäureester, insbesondere ABS, Bisphenol-A-Polycarbonat, Polycapronamid (Nylon 6), Polyhexamethylen-diaminoadipinsäureamid (Nylon 66), Polyethylen- und Polybutylenterephthalat.

Ausführungsbeispiele
Abschnitt A
Verwendete Materialien:

I. Styrol/Acrylnitril-(Gewichtsverhältnis 66:34)-Copolymerisat mit einem mittleren Molgewicht von 165.000, hergestellt durch Emulsionspolymerisation und anschließend als Pulver isoliert.

II. Styrol/Acrylnitril-Pfropfpolymerisat von 50 Gew.-% Styrol-Acrylnitril-Gemisch (im Gewichtsverhältnis 72:28) auf 50 Gew.-% Polybutadien eines mittleren Teilchendurchmessers ($d_{50}$) von 0,4 µm, hergestellt durch Emulsionspolymerisation und isoliert durch Koagulation.

III. Dispersion von Polytetrafluorethylen (Hostaflon® TF 5032, Hoechst AG) mit einem F-Gehalt von 70,5 Gew.-%.

IV. $Sb_2O_3$ (Stibiox® MS).

V. Dacabromdiphenylether (DE 79 der Great Lakes Comp.).

Herstellung einer erfindungsgemäßen Polymermischung

Die Dispersion III wurde mit dem Latex II des Pfropfpolymerisats vermischt, in einem Mengenverhältnis (bezogen auf feste Polymere) von 0,1:99,9. Nach gründlicher Verteilung wurden, 1,8 Gew.-%, bezogen auf Polymer-Feststoff, an phenolischen Antioxidantien als wäßrige Dispersion zugesetzt und die Mischung bei 85—95°C einer wäßrigen Lösung von MgSO₄ und Essigsäure (pH=4—5) zugesetzt, das Koagulat filtriert, bis zur praktischen Elektrolytfreiheit gewaschen, entwässert und bei 100°C zu einem Pulver getrocknet. Dieses Pulver wird im folgenden als "FR" bezeichnet.

Herstellung und Prüfung erfindungsgemäßer Abmischungen

Auf einem Innenkneter wurden die Bestandteile I, II, FR, IV und V in den in Tabelle 1 angegebenen Mengen (Angaben in Gewichtsteilen) gemischt.

TABELLE 1

| Versuch | I | II | FR | IV | V | Additive |
|---|---|---|---|---|---|---|
| Vergleich 1 | 60,0 | 40,0 | — | 6,0 | 20,0 | 3,0 Pentaerythrittetrastearat |
| Vergleich 2 | 80,0 | 20,0 | — | 6,0 | 18,0 | 0,2 Siliconöl |
| Beispiel 1 | 60,0 | 40,0 | 2,0 | 6,0 | 20,0 | 0,5 Sn-Stabilisator |
| Beispiel 2 | 80,0 | 20,0 | 2,0 | 6,0 | 18,0 | 2,0 Diphenyl-2-ethylhexylphosphat |

Die erhaltenen Massen wurden zu Prüfkörpern verspritzt und folgenden Tests unterzogen:
—Schlagzähigkeit nach DIN 53 543 [$a_n$]
—Kerbschlagzähigkeit nach DIN 53 543 [$a_k$]
—Wärmeforbeständigkeit nach Vicat B [Vicat B]
—Brandtest nach Vorschrift Underwriters Laboratories, S. 94 [UL 94]
—Brennbarkeitsprüfung nach IBM-Norm DMH 6-0430-102 [IBM-Test]
—Visuelle Beurteilung der Oberfläche.

TABELLE 2 zeigt die erreichten Prüfdaten

|  | $a_n$ | $a_k$ | Vicat B | IBM-Test 1,6 mm | IBM-Test 3,2 mm | UI 94 1,6 mm | UI 94 3,2 mm | Oberfläche |
|---|---|---|---|---|---|---|---|---|
| Vergleich 1 | 96 | 12 | 90 | 15 DJ | 25 DJ | VO | VO | glänzend |
| Vergleich 2 | 63 | 6,2 | 91 | 15 DJ | 30 DJ | VO | VO | „ |
| Beispiel 1 | 96 | 12 | 88 | 20 DJ | 55 DJ | VO | VO | „ |
| Beispiel 2 | 62 | 6,9 | 90 | 35 DJ | 60 DJ | VO | VO | „ |

Zusatz von Polytetrafluorethylen in Pulverform
(nicht erfindungsgemäße Vergleichsversuche

| | |
|---|---|
| 80 | Teile Harz I |
| 20 | Teile Pfropfpolymerisat II |
| 3 | Teile Pentaerythrittetrastearat |
| 0,2 | Teile Siliconöl |
| 0,5 | Teile Sn-Stabilisator |
| 6,0 | Teile $Sb_2O_3$ (IV) |
| 18,0 | Teile DE79 (V) |

wurden wie üblich gemischt unter Zusatz der in Tabelle 3 angegebenen Mengen Polytetrafluorethylen-Pulver (Hostaflon TF 9202 der Fa. Hoechst). Die Oberflächengüte wurde qualitativ beurteilt, der Oberflächenglanz entsprechend der Skala A-H nach DE—AS—24 20 358.

TABELLE 3

| | [Tle] Zugesetzte Menge Polytetrafluorethylen-Pulver | Glazstufe | Oberfläche |
|---|---|---|---|
| Vergleichsversuch 3 | — | F | glänzend |
| Vergleichsversuch 4 | 1 | C | leichte Schleierbildung |
| Vergleichsversuch 5 | 2 | B—C | starke Schleierbildung |

Abschnitt B
Eingesetzte Polymerisate und Zusätze
I. Aromatisches Polycarbonat aus 10 Gew.-% Tetrabrombisphenol A und 90 Gew.-% Bisphenol A mit relativer Viskosität, gemessen in $CH_2Cl_2$ bei 25°C, von 1,284 (0,5 gew.-%ige Lösung).
II. Ologimeres Polycarbonat aus Tetrabrombisphenol A und einem durchschnittlichen Polykondensationsgrad von 5.
III. ABS-Pfropfpolymerisat von 50 Gew.-% Styrol-Acrylnitril-Gemisch (im Gew.-Verhältnis von 72:28) auf 50% teilchenförmiges Polybutadien einer mittleren Teilchendurchmesser ($d_{50}$) von 0,4 µm, erhalten durch Emulsionspolymerisation.
IV. Thermoplastisches Polymerisat aus Styrol und Acrylnitril mit einem Acrylnitrilgehalt von 26 Gew.-% und einem mittleren Molekulargewicht von 60 000.
V. Polytetrafluorethylen "Teflon® 702N" (DuPont) als Pulver. Das Polymer besitzt einen F-Gehalt von 73,7 Gew.-%.
VI. Dispersionen von Tetrafluorethylenpolymerisat "Teflon 42N" (Dupont); das dispergierte Polymer besitzt einen F-Gehalt von 73,7 Gew.-%, bzw. Dispersionen von Tetrafluorethylenpolymerisat "Hostaflon TF 5032" (Fa. Hoechst); dieses dispergierte Polymer besitzt einen F-Gehalt von 70,5 Gew.-%.
VII. $Sb_2O_3$ ("Stibiox MS").
VIII. Ruß "Black-Pearls 900" (Fa. Cabot).

Herstellung der Formmassen

a) Herstellung durch direkte Compoundierung aller Komponenten:

Compoundierung auf einem Banbury-Innenkneter (Fa. Pomini-Farrel) vom Typ BR (1,2 l) oder Typ 00C (3 l) bei 230—240°C. Die in den Tabellen angegebenen Gew.-Teile werden direkt compoundiert.

b) Herstellung nach dem erfindungsgemäßen Verfahren:

Die Dispersion des Tetrafluorethylenpolymerisats VI. wurde mit der Emulsion des SAN-Pfropfpolymerisats III. und evtl. der Emulsionen des thermoplastischen Polymerisates IV. vermischt und mit 1,8 Gew.-%, bezogen auf Polymerfeststoff, phenolischer Antioxidantien stabilisiert. Bei 85—95°C wird die Mischung mit einer wäßrigen Lösung von $MgSO_4$ (Bittersalz) und Essigsäure bei pH 4 koaguliert, filtriert und bis zur praktischen Elektrolytfreiheit gewaschen, anschließend durch Zentrifugation von der Hauptmenge Wasser befreit und danach bei 100°C einem Pulver getrocknet.

Dieses Pulver kann dann mit den weiteren Komponenten in den in a) beschriebenen Aggregaten compoundiert werden.

Zusammensetzung der Formmassen Tabelle 1) und 2) gibt die Zusammensetzung der Formmassen an (Angaben in Gew.-Teilen):

TABELLE 1

| | 1 | 2 | 3 | 4 | 5 | 6 |
|---|---|---|---|---|---|---|
| Polycarbonat I. | 72 | 72 | 72 | 70 | 70 | 70 |
| Polycarbonat II. | 1 | 1 | 1 | 1 | 1 | 1 |
| Pfropfpolymerisat III. | 11,2 | — | — | 14 | — | — |
| Polymerisat IV | 16,8 | 16,8 | 16,8 | 14 | 14 | 14 |
| $Sb_2O_3$ | 2 | 2 | 2 | 2 | 2 | 2 |
| Ruß | — | — | — | 1 | 1 | 1 |
| Mischung aus 97,5 Gew.-% III. und 2,5 Gew.-% Teflon 42N, hergestellt im Sinne der Erfindung (nach b), | — | 11,2 | — | — | 14 | — |
| Mischung aus 97,5 Gew.-% III. und 2,5 Gew.-% Hostaflon TF 5032, hergestellt im Sinne der Erfindung (nach b), | — | — | 11,2 | — | — | 14 |

Die Komponenten werden in dem unter a) angegebenen Aggregat compoundiert.

TABELLE 2

| | 7 | 8 | 9 | 10 | 11 |
|---|---|---|---|---|---|
| Polycarbonat I. | 70 | 70 | 70 | 70 | 70 |
| $Sb_2O_3$ | 2 | 2 | 2 | 2 | 2 |
| Teflon 702N-Pulver V. | — | 0,25 | — | — | — |
| ABS[1] | 28 | 28 | — | 28 | 28 |
| Mischung aus 99% ABS[1,2] und 1% Hostaflon TF 5032, hergestellt im Sinne der Erfindung (nach b), Pulver[3], gewonnen aus Dispersion Hostaflon TF 5032 | — | — | 28 | — | — |
| | — | — | — | 0,25 | 0,1 |

[1]ABS besteht aus 60 Gew.-Teilen Harz IV. und 40 Gew.-Teilen Pfropfpolymer III., die Komponenten wurden durch Emulsionspolymerisation hergestellt, die Latices wurden vermischt und bei pH 4—5 zu einem Pulver gefällt und aufgearbeitet.

[2]Die Latexmischung aus III. und IV. wird mit einer Dispersion von "Hostaflon TF 5032" vemrischt und dann bei pH 4—5 zu einem Pulver aufgearbeitet.

[3]Die Dispersion "Hostaflon TF 5032" wird koaguliert, filtriert und das Pulver bei 70°C getrocknet.

Eigenschaften der Formmassen

Die Formmassen 1—11 werden bei 260°C spritzgegossen (Aggregat: Werner-Pfleiderer-Schnecke DKS 275, Schließkraft 275 MP, Schneckendurchmesser 56 mm, Länge L/D-23/1).

### Brandverhalten nach UL Subj. 94

| Formmasse | 1 | 2 | 3 | 4 | 5 | 6 | 7 | 8 | 9 | 10 | 11 |
|---|---|---|---|---|---|---|---|---|---|---|---|
| 1,6 mm | V-2-/-/10 | V-O | V-O | V-2-/-/5 | V-O | V-O | V-2-1/-/9 | V-O | V-O | V-O | |
| 2,5 mm | V-3-/-/2 | V-O | V-O | V-2-/-/5 | V-O | V-O | — | — | — | — | — |
| 3,2 mm | — | — | — | — | — | — | V-2-1/-/9 | V-O | V-O | V-O | V-O |

Spritzgußformkörperbeschaffenheit[1]

| | | | | | | | | | | | |
|---|---|---|---|---|---|---|---|---|---|---|---|
| o.k. | o.k. | o.k. | o.k. | o.k. | o.k. | o.k. | n.i.o. | o.k. | n.i.o. | n.i.o. | |

[1]Visuell beurteilt an größeren Gehäusen mit einem Schußgewicht von 245 g bzw. an Musterplättchen einer Größe von 40×60 mm und einer Dicke von 4 mm.
o.k.=Oberflächen einwandfrei.
n.i.o. Oberfläche ist stark gestört durch Mikrorisse.

### Mechanische Eigenschaften
Bestimmt an Normkleinstäben; Kerbschlagzähigkeit nach DIN 53 453, Vicat-B nach DIN 53460

| Formmasse 1 | 1 | 2 | 3 | 4 | 5 | 6 | 7 | 8 | 9 | 10 | 11 |
|---|---|---|---|---|---|---|---|---|---|---|---|
| Kerbschlagzähigkeit (kJ/m²) | 21 | 23 | 22 | 34 | 36 | 34 | 34 | 33 | 30 | 34 | 33 |
| Vicat B-Temperatur (°C) | 136 | 135 | 136 | 137 | 138 | 139 | 138 | 137 | 136 | 136 | 137 |

Wie aus den Tabellen hervorgeht, wird durch den Zusatz der kleinen Mengen Tetrafluorethylenpolymerisat die Flammwidrigkeit der Formmassen stark verbessert. Wird allerdings das Tetrafluorethylenpolymerisat als Pulver bei der Compoundierung der Komponenten eingegeben, so wird zwar auch gutes Brandverhalten erreicht, aber die Oberflächen von Formkörpern aus solchen Massen sind nicht immer einwandfrei; sie zeigen Mikrorisse bzw. Schlieren. Werden Tetrafluorethylenpolymerisatdispersionen in dem erfindungsgemäßen Verfahren zu den Formkörpern aufgearbeitet, so lassen sich Formkörper ohne Oberflächenstörungen spritzgießen. Trotz der Gegenwart der Tetrafluorethylenpolymerisate in dem Formmassen werden relevante mechanische Eigenschaften nicht verschlechtert.

Abschnitt C
Verwendete Komponenten:

I. Polycarbonat aus Bisphenol-A, Phenol und Phosgen, relative Viskosität 1,285, gemessen in Dichlormethan bei 25°C in 0,5%iger Lösung.

II. Polybutylenteraphthalat mit einer Intrinsic-Viskosität von 1,18 dl/g, gemessen in Phenol/o-Dichlorbenzol (Gew.-Verhältnis 1:) bei 25°C im Ubbelohde-Viskosimeter.

III. Pfropfpolymerisat, 80% Pfropfgrundlage aus vernetztem Polybutadien (Gelgehalt über 70%, gemessen in Toluol) und 20% Pfropfauflage aus Methylmethacrylat.

IV. Mischung aus 95 Gew.-% Pfropfpolymerisat gemäß III. und 5 Gew.-% Polytetrafluorethylen mit einem Fluorgehalt von 74 Gew.-%.

V. Terpolymerisat aus Ethylen, Acrylsäure und tert.-Butylacrylat im Gew.-Verhältnis 89/4/7 mit einem Schmelzindex von 6—8 g/10 min. (gemessen bei 190°C und 2.16 kp Belastung nach DIN 53 735) und einer Dichte von 0,924 g/cm³ (gemessen nach DIN 53 479).

VI. Pentaerythrittetrastearat (übliches Entformungsmittel).

Herstellung des Gemisches aus Pfropfpolymerisat und Tetrafluorethylenpolymerisat (Komponente IV) (Angaben in Gew.-Teilen)

100 Teile einer 40 Gew.-%igen wäßrigen Dispersion des Pfropfpolymerisates III. und 3,5 Teile einer Tetrafluorethylenpolymerisatdispersion mit einem Festgehalt von 60 Gew.-% und einem Fluorgehalt (bezogen auf den Feststoff von 73,7 Gew.-%) werden vermischt und mit 1,8 Gew.-%, bezogen auf Polymerfeststoff, phenolischer Antioxidantien stabilisiert. Bei 85—95°C wird die Mischung mit einer wäßrigen Lösung von MgSO₄ (Bittersalz) und Essigsäure bie pH 4—5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

Herstellung und Zusammensetzung der Formmassen

Auf einem Zweiwellenextruder wurden die Komponenten unter Stickstoffatmosphäre aufgeschmolzen (Gew.-Teile s. nachfolgende Tabelle 1) und homogenisiert. Die Zylindertemperatur wurde so gewählt, daß die in der Tabelle angegebene Massetemperatur gewährleistet war. Der Schmelzstrang der erfindungsgemäßen Mischungen wurde vor dem Austritt aus der Düse entgast, in Wasser abgekühlt, granuliert und getrocknet. Die Verarbeitung erfolgte auf einer Spritzgußmaschine.

TABELLE 1

| Beispiel Nr. | Komponenten Gew.-% | | | | | | Massetemperatur °C | |
|---|---|---|---|---|---|---|---|---|
| | I | II | III | IV | V | VI | Extruder | Spritzguß |
| 1. (Vergleich) | 52 | 36 | 10 | — | 2 | — | 277 | 270 |
| 2. (Vergleich) | 51,5 | 36 | 10 | — | 2 | 0,5 | 275 | 270 |
| 3. | 52 | 36 | — | 10 | 2 | — | 278 | 270 |

III. Eigenschaften der Formkörper

Zur Ermittlung des Entformungsverhaltens der Formmassen wird ein schwach konischer Zylinder gespritzt. Der große Außendurchmesser des Zylinders betrug 43 mm, der kleine Außendurchmesser 39 mm. Die Wanddicke war 3 mm und die Höhe des Zylinders betrug 35 mm. Es wurden fortlaufend diese Zylinder gespritzt, wobei die Kerntemperatur ausgehend von 60°C langsam erhöht wurde. Die Kraft, die von den Entformungsstiften aufgewendet werden mußte, um das Teil zu entformen, wurde in Abhängigkeit von der Temperatur gemessen. Üblicherweise ist dieser Druck bis zu einer kritischen Temperatur des Werkzeugkerns praktisch konstant. Oberhalb einer bestimmten Temperatur steigt die Entformungskraft plötzlich stark an. Diese Temperatur ist die Klebetemperatur der Masse. Sie bestimmt ganz entscheidend die Zykluszeit. Neben dieser Eigenschaft wurde zusätzlich die Vicat B-Erweichungstemperatur nach DIN 53 450 und die Izod-Kerbschlagzähigkeit bei −20°C nach ASTM D 256 an 3,2 mm starken Izod-Stäben bestimmt. Die Tabelle 2 zeigt die Ergebnisse.

TABELLE 2

| Beispiel Nr. | Minimale Entformungs- kraft bar | Klebetem- peratur °C | Izod bei −20°C J/m | Vicat B °C |
|---|---|---|---|---|
| 1. Vergleich | 30 | 85—90 | 650 | 119 |
| 2. Vergleich | 30 | 85—90 | 630 | 117 |
| 3. | 35 | 95—100 | 531 | 125 |

Man erkennt, daß durch den erfindungsgemäßen Zusatz die Klebetemperatur der Masse entscheidend angehoben wird. Auch die Vicat B-Erweichungstemperatur ist erhöht. Die Zähigkeit bei −20°C ist nach wie vor im zähen Bereich, d.h. die Formkörper brechen nicht spröde.

Führt man das Tetrafluorethylenpolymerisat in die Formmasse des Beispiels 3 nicht mittels des erfindungsgemäßen Verfahrens ein, sondern setzt man es als Additiv während der Compoundierstufe in Form eines Tetrafluorethylenpolymerisatpulvers ein, so sind die Eigenschaften wie Entformung deutlich schlechter, die Vicaterhöhung ist unbefiedigend und als besonders störender Nachteil macht sich eine unakzeptable Oberflächenqualität (Homogenitätstörungen) von daraus hergestellten Spritzguß-Formkörpern bemerkbar.

**Patentansprüche**

1. Verfahren zur Herstellung von hochdisperses, teilchenförmiges Tetrafluorethylenpolymerisat mit Fluorgehalten von 65—76 Gew.-% enthaltenden pulverförmigen Polymermischungen auf der Basis von organischen thermoplastischen Polymerisaten als Substrat, dadurch gekennzeichnet, daß

I. eine wässrige Dispersion A eines organischen thermoplastischen Polymerisats auf der Basis von Styrol, α-Methylstyrol, p-Methylstyrol, Halogenstyrol, Acrylnitril, Methacrylnitril, Alkylacrylat,

7

Alkylmethacrylat, Maleinsäureanhydrid, N-substituiertes Maleinimid, Vinylacetat, Vinylchlorid, Vinylidenchlorid, Vinylidenfluorid und/oder eines thermoplastischen Pfropfpolymerisates dieser Monomeren auf einen Kautschuk mit einer Glasübergangstemperatur kleiner 0°C, mit einem Kautschukgehalt von 8—80 Gew.-%, wobei die Dispersion einen mittleren Teilchendurchmesser ($d_{50}$) von 0,05—30 µm und einen Feststoffgehalt von 20—60 Gew.-% aufweist mit einer Dispersion (B) eines Tetrafluorethylenpolymerisats mit einem mittleren Teilchendurchmesser ($d_{50}$) von 0,05—30 µm und einem Feststoffgehalt von 30—70 Gew.-% so vermischt wird, daß praktisch keine Agglomerisation der Teilchen stattfindet und daß Mischungen mit 0,01—40 Gew.-% Tetrafluorethylenpolymerisat und 99,99—60 Gew.-% organischem thermoplastischem Polymerisat gebildet werden,

II. die in I gebildete Mischung bei 20—120°C und pH-Werten von 7—2 unter Bildung einer pulverförmigen Polymerenmischung koaguliert wird, so daß während der Koagulation keine nennenswerten Mengen von Tetrafluorethylenpolymerisatteilchen eines Durchmessers größer als 30 µm gebildet werden,

III. das in II gebildete Koagulat bei Temperaturen von 50—150°C getrocknet wird.

2. Verfahren gemäß Anspruch 1, dadurch gekennzeichnet, daß Dispersionen (A) mit einem mittleren Teilchendurchmesser von 0,05 µm eingesetzt werden.

3. Verfahren gemäß Anspruch 2, dadurch gekennzeichnet, daß die Dispersion (A) Teilchen eines mittleren Durchmessers von 0,05—0,15 µm ($d_{50}$-Wert) in Mischung mit solchen eines mittleren Durchmessers von 0,2—0,8 µm enthält.

4. Verwendung von pulverförmigen Polymermischungen hergestellt gemäß Anspruch 1 als Zusatz zu thermoplastischen Formmassen.

**Revendications**

1. Procédé pour préparer des mélanges de polymères pulvérulents, à base de polymères thermoplastiques organiques comme substrat, contenant du polymère de tétrafluoréthylène hautement dispersé, sous forme de petite particule ayant des teneurs en fluor de 65 à 76% en poids, procédé caractérisé en ce que:

I. on mélange une dispersion aqueuse A d'un polymère thermoplastique organique, à base de styrène, d'α-méthylstyrène, de p-méthylstyrène, d'halogénostyrène, d'acrylonitrile, de métacrylonitrile, d'un acrylate d'alkyle, d'un méthacrylate d'alkyle, d'anhydride de l'acide maléique, de maléinimide substitué sur l'azote, d'acétate de vinyle, de chlorure de vinyle, de chlorure de vinylidène, de fluorure de vinylidène et/ou d'un polymère thermoplastique de greffage de ces monomères sur un caoutchouc ayant une température de transition vitreuse inférieure à 0°C, avec une teneur en caoutchouc de 8 à 80% en poids, (la dispersion présente un diamètre particulaire moyen ($d_{50}$) de 0,05 à 30 µm et une teneur en matière sèche de 20 à 60% en poids), avec une dispersion (B) d'un polymère de tétrafluoréthylène ayant un diamètre particulaire moyen ($d_{50}$) de 0,05 à 30 µm et une teneur en matière sèche de 30 à 70% en poids, de manière qu'il ne se produise pratiquement pas d'agglomérisation des particules et qu'il se forme des mélanges comportant 0,01 à 40% en poids de polymère de tétrafluoréthylène et 99,99 à 60% en poids d'un polymère thermoplastique organique.

II. On soumet le mélange, formé en I, à une coagulation effectuée entre 20 et 120°C et à des valeurs du pH de 7 à 2, avec formation d'un mélange pulvérulent de polymères, en opérant de manière que, pendant la coagulation, il ne se forme pas de quantités notables de particules de polymère de tétrafluoréthylène ayant un diamètre supérieur à 30 µm.

III. On sèche, à des températures de 50 à 150°C, le coagulat formé en II.

2. Procédé selon la revendication 1, caractérisé en ce qu'on utilise des dispersions (A) ayant un diamètre particulaire moyen de 0,05 µm.

3. Procédé selon la revendication 2, caractérisé en ce que la dispersion (A) contient des particules ayant un diamètre moyen de 0,05 à 0,15 µm (valeur de $d_{50}$), en mélange avec des particules ayant un diamètre moyen de 0,2 à 0,8 µm.

4. Utilisation de mélanges de polymères pulvérulents, préparés, selon la revendication 1, comme additif pour des matières thermoplastiques à mouler.

**Claims**

1. A process for the production of powder-form polymer mixtures based on organic thermoplastic polymers as substrate and containing highly disperse, particulate tetrafluoroethylene polymer with fluorine contents of 65 to 76% by weight, characterized in that

I. an aqueous dispersion (A) of an organic thermoplastic polymer based on styrene, α-methyl styrene, p-methyl styrene, halostyrene, acrylonitrile, methacrylonitrile, alkyl acrylate, alkyl methacrylate, maleic anhydride, N-substituted maleic imide, vinyl acetate, vinyl chloride, vinylidene chloride, vinylidene fluoride and/or a thermoplastic graft polymer of these monomers on a rubber having a glass transition temperature below 0°C, the rubber content being from 8 to 80% by weight, the dispersion having an average particle diameter ($d_{50}$) of from 0.050 to 30 µm and a solids content of 20 to 60% by weight, is mixed with a dispersion (B) of a tetrafluoroethylene having an average particle diameter ($d_{50}$) of 0.05 to 30 µm and a solids content of 30 to 70% by weight in such a way that hardly any agglomeration of the particles occurs and mixtures containing 0.01 to 40% by weight tetrafluoroethylene polymer and 99.99 to 60% by weight organic thermoplastic polymer are formed,

II. the mixture formed in I is coagulated at 20 to 120°C and at pH values of 7 to 2 to form a powder-form polymer mixture so that no appreciable quantities of tetrafluoroethylene polymer particles larger than 30 μm in diameter are formed during the coagulation process,

III. the coagulate formed in II is dried at temperatures of 50 to 150°C.

2. A process as claimed in claim 1, characterized in that dispersions (A) having an average particle diameter of 0.05 μm are used.

3. A process as claimed in claim 2, characterized in that dispersion (A) contains particles having an average diameter ($d_{50}$ value) of 0.05 to 0.15 μm in admixture with particles having an average diameter of 0.2 to 0.8 μm.

4. The use of powder-form polymer mixtures produced by the process claimed in claim 1 as an additive for thermoplastic moulding compounds.